# EUROPEAN PATENT SPECIFICATION

(11) **EP 3 659 544 B1**
(45) Date of publication and mention of the grant of the patent: **01.06.2022**
(21) Application number: 19210515.3
(22) Date of filing: 21.11.2019
(51) Int. Cl.: A61C 8/00

(54) **DENTAL IMPLANTS**
ZAHNIMPLANTATE
IMPLANTS DENTAIRES

(30) Priority: 28.11.2018 IT 201800010651
(43) Date of publication of application: 03.06.2020
(73) Proprietor: I.D.I. Evolution S.r.l., 20900 Monza (MB) (IT)
(72) Inventor: PIANTONI, Andrea, 20855 Lesmo (MB) (IT)
(74) Representative: Franco Martegani S.r.l.

(56) References cited:
- EP-A2- 1 444 964
- CN-A- 101 366 664
- US-A- 5 584 629
- US-A1- 2004 063 069
- US-A1- 2012 058 451
- US-A1- 2014 234 800

## Description

The present invention relates to dental implants

It is known that dental implants must have an antirotational geometry external or internal to the same implant that allows coupling with a device or superstructure by means of a connection screw or screwless conometric coupling that gives the possibility of creating a screwed or cemented prosthesis.

For the term "screw coupling" there is no need for any explanation as it is the same definition that defines the type.

The term "conometric coupling" on the other hand, refers to a joining system in a combined prosthesis between a primary part, cemented on the abutment, and a secondary part which is integral with the removable portion of the prosthesis.

The coupling of the two parts, called conical coupling, allows a very resistant connection without interludes of glues, hooks, attachments or other anchoring systems.

Having to choose between the above-mentioned types of coupling between dental implants and prosthetic devices creates great limits.

It is in fact necessary to have the parts equipped with both of these types of coupling available in order to be able to intervene in one way or another once the choice has been made on the basis of personal experience and evaluation.

All of this in order to have a system with optimal parallelism between the component and application parts, as well as perfect alignment with another implant.

Currently, above all to overcome the problem of non-parallelism between two or more implants, additional components are generally installed on the implants to allow the angle to be corrected and a combined structure to be installed on the same.

In the same way, implants with external coupling geometries provide the possibility of angles but do not guarantee a coupling on a single tooth adequate for preventing its unscrewing.

CN 101 366 664 A, US 2004/063069, US 2012/058451, US 5584451 and EP 1444964 disclose a series of dental implant systems existing prior to the present patent application. For instance document CN 101 366 664 A shows a dental implants comprising an endosseous screw and an abutment, said endosseous screw at its free upper end being provided with three different sections for coupling within a cavity of said abutment, a first coronal section with an anti-rotation groove, followed by a second conical section and a third conical section with a larger cone angle.

The general objective of the present invention is to provide a connection between dental implants and prosthetic devices capable of solving the above-mentioned drawbacks of the known art in an extremely simple, economical and particularly functional manner.

A further objective of the present invention is to provide a connection between dental implants and prosthetic devices which allows the costs to be reduced as it avoids the use of any additional components.

Another objective of the present invention is to provide a connection between dental implants and prosthetic devices with characteristics of coupling versatility between the implant itself and the relative superstructure.

The above objectives are achieved by dental implants according to independent claim 1 and the following subclaims.

With this innovative solution of the present invention it is possible to cover both the prosthetic solutions mentioned above by enclosing them in a single device and without requiring additional components.

Furthermore, as will be seen, the solution of the present invention has various advantages, such as a reduction in the costs, it avoids the use of additional components and there is a considerable reduction in vertical encumbrance with respect to the prior art.

The structural and functional characteristics of the present invention and its advantages with respect to the known art will be even more evident from the following description, referring to the attached schematic drawings, which show an embodiment example of the same invention. In the drawings:

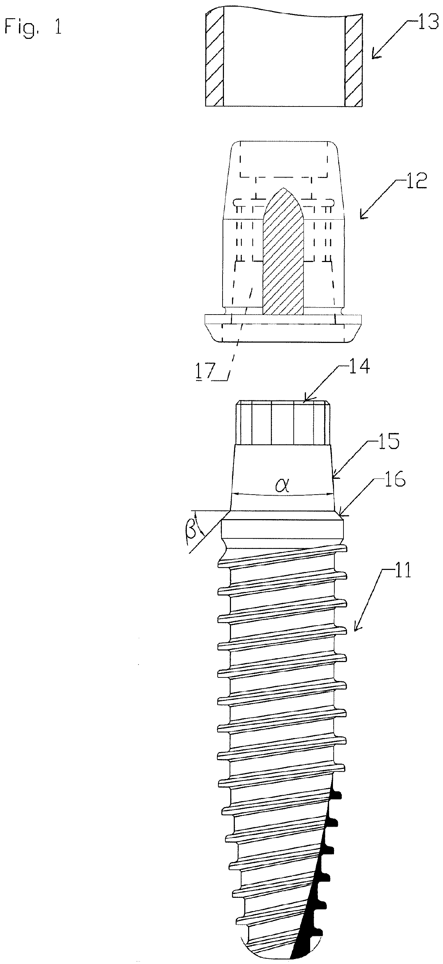

- figure 1 shows an exploded raised side view of an endosseous screw and an abutment of an implant provided with a connection according to the present invention;

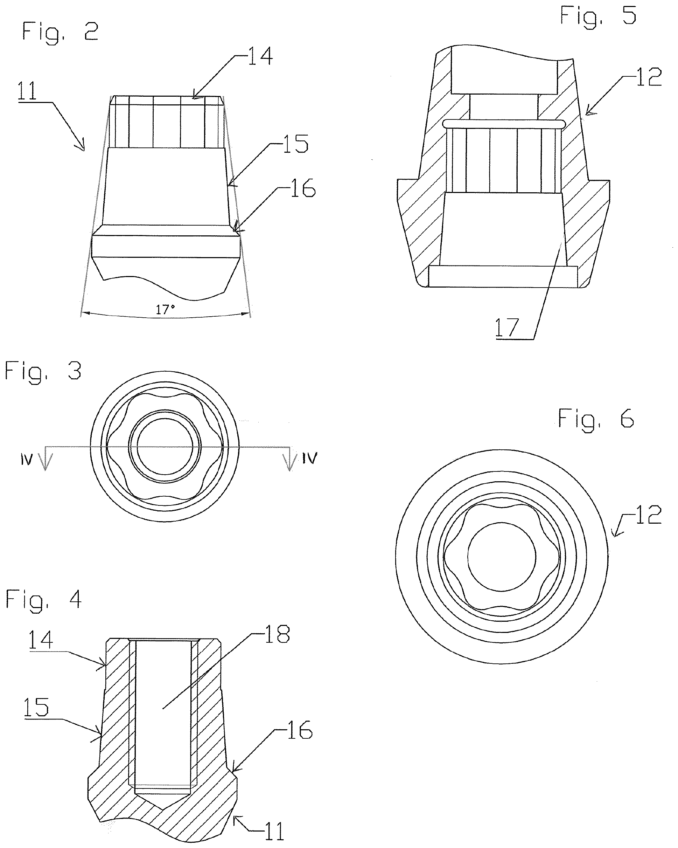

- figure 2 shows an enlarged raised view of an upper end portion of the endosseous screw of figure 1;
- figure 3 shows a view from above of the portion of figure 2,
- figure 4 is a section according to the arrow IV-IV of figure 3;
- figure 5 is a raised section of an abutment equipped with a connection for coupling with a screw such as that shown in figures 2 to 4;
- figure 6 is a view from below of the abutment of figure 5.

With reference to the figures, exemplary and non-limiting, these show an embodiment of a connection between dental implants and prosthetic devices produced according to the present invention.

In particular, it should first of all be pointed out that a dental implant is a fixed prosthetic device, used for covering the space left free by one or more missing or extracted teeth. There are generally three substantial parts that make up the dental implant: an endosseous screw 11, an abutment 12 and a dental prosthesis schematized in 13.

It should also be pointed out that the term abutment in dentistry defines the detached and emerging component from the gingival, of an intra-osseous implant.

The abutment is the support of the superstructure that replicates the natural tooth with an artifact, for example the crown of a single element that can be placed integral with said abutment 12.

Finally, as a final premise, it should also be noted that the abutment-screw fixing, as mentioned above, is effected selectively by cementing or by screwing.

According to the present invention, this type of connection has been conceived as being provided with an arrangement composed of three geometrical figures all belonging to the same connection.

The connection therefore comprises, at an upper end of an endosseous screw 11, at least three external sections 14,15,16 having a differentiated form in succession, in the form of a male, suitable for being coupled within a cavity 17 formed in said abutment 12.

In a preferred but non-limiting embodiment, the internal cavity 17 of the abutment 12 provides for an arrangement of sections having a differentiated form in succession, in the form of a female and complementary to the sections indicated above of the endosseous screw 11.

With respect to the endosseous screw 11, it can be noted that in the first section, which is the area arranged directly at the free end of the endosseous screw 11, an external shaping is provided according to an anti-rotation figure or section 14, such as example similar to a torx key. The term torx refers to a type of screw with an external star-shaped head with a series of points. This type of screw, also known as "six-pointed screw" or "star screw", is standardized and includes a threaded hole 18 useful for its handling during treatment.

It is well known that torx screws allow a high torque to be applied, without causing the forced exiting of the screwdriver or suitable tool as occurs in cross-slotted screws, and greater than can be obtained with recesses with a smaller working surface, for example a hexagonal recess.

In the area located directly below the first section of the free end of the endosseous screw 11, an external shaping is provided according to a figure or a section 15, 16 deriving from the overlapping of two cones or truncated cones according to a totally new and original aspect.

Of these two cones or truncated cones, a first cone-shaped area 15, which corresponds to the second section 15 following directly said first section 14, provides an external inclination which is less than an angle α of 8°, preferably less than 5°, more preferably less than 4°, which also guarantees a coupling for a single tooth or a single dental prosthesis 13.

A second cone-shaped area 16, which corresponds to the third section 16 following directly said second section 15, provides an external inclination angle β of 50-60°, or 45° for a coupling for a multiple implant.

As already mentioned, the section with an external anti-rotation figure or section 14 allows the traction of the dental device and the transmission of the screwing torque.

The first cone-shaped section at 4° allows a close coupling with the abutment to prevent unscrewing over time.

In this way, the objective is achieved whereby a connection of a dental implant is identified with the unique characteristic of coupling versatility between the implant itself and the superstructure in two distinct points.

Consequently, according to this invention, the problem of non-parallelism between two or more implants without the aid or use of additional components on the implants to allow the angle to be corrected and a combined structure to be installed on the same, is advantageously overcome.

In the same way, implants with the particular external coupling geometries of the connection of the present invention provide for the possibility of correcting angles and ensuring a coupling on a single tooth adequate for preventing its unscrewing.

With this innovative solution we are able to cover both of the prosthetic solutions used in the known art with a single connection device, as already indicated without the need for additional components.

The objective mentioned in the preamble of the description has therefore been achieved.

The protection scope of the present invention is defined by the enclosed claims.

## Claims

1. A dental implant suitable for receiving prosthetic devices, wherein said dental implant comprises at least one endosseous screw (11) and an abutment (12),
wherein said prosthetic device
comprises at least one dental prosthesis (13) that can be positioned integral with said abutment (12),
said endosseous screw (11) at a free upper end having external sections with a differentiated form (14, 15, 16), in the form of a male for coupling within a cavity (17) of said abutment (12),
wherein said endosseous screw (11) in said free upper end has at least three external sections having a differentiated form (14, 15, 16) arranged in succession as follow,
a first section at the coronal end of the endosseous screw (11) which provides an external shaping according to an anti-rotation figure or section (14),
a second section (15) which directly follows said first section (14) and defines a first cone-shaped area (15) with an external inclination which is less than an angle α of 8°, preferably less than 5°, more preferably less than 4°,
a third section (16) which directly follows said second section (15) and defines a second cone-shaped area (16) with an external inclination angle β of 50-60°, or 45° said second and third sections (15,16) providing an external shaping according to a figure or a section (15,16) deriving from an overlapping of two cones or truncated cones.

2. Dental implant according to the previous claim 1, **characterized in that** said internal cavity (17) of the abutment (12) provides an arrangement of sections having a differentiated form in succession, in the form of a female and complementary to the first above-mentioned section (14) of the endosseous screw (11) .

3. A dental implant according to the previous claims, **characterized in that** said internal cavity (17) of the abutment (12) provides an arrangement of sections having a differentiated form in succession, in the form of a female and complementary to the above-mentioned sections (14,15,16) of the endosseous screw (11).

## Patentansprüche

1. Zahnimplantat, das zur Aufnahme von prothetischen Vorrichtungen geeignet ist, wobei das Zahnimplantat zumindest eine enossale Schraube (11) und ein Abutment (12) umfasst,
wobei die prothetische Vorrichtung zumindest eine Zahnprothese (13) umfasst, die integral mit dem Abutment (12) positioniert werden kann,
die enossale Schraube (11) an einem freien oberen Ende äußere Abschnitte mit einer differenzierten Form (14, 15, 16) in der Form einer Patrize zur Kopplung innerhalb eines Hohlraums (17) des Abutments (12) aufweist,
wobei die enossale Schraube (11) an dem freien oberen Ende zumindest drei äußere Abschnitte mit einer differenzierten Form (14, 15, 16) aufweist, die wie folgt aufeinanderfolgend angeordnet sind,
ein erster Abschnitt am koronalen Ende der enossalen Schraube (11), der eine äußere Formgebung gemäß einer Antirotationsfigur oder Abschnitt (14) bereitstellt,
ein zweiter Abschnitt (15), der sich direkt an den ersten Abschnitt (14) anschließt und eine erste kegelförmige Fläche (15) mit einer Außenneigung die weniger als ein Winkel α von 8°, vorzugsweise weniger als 5°, besonders bevorzugt weniger als 4°, definiert,
ein dritter Abschnitt (16), der sich direkt an den zweiten Abschnitt (15) anschließt und eine zweite kegelförmige Fläche (16) mit einem Außenneigungswinkel β von 50-60°, oder 45°, definiert,
wobei der zweite und dritte Abschnitt (15, 16) eine äußere Formgebung gemäß einer Figur oder einem Abschnitt (15, 16) bereitstellen, die bzw. der sich aus einer Überlappung der beiden Kegel oder abgeschnittenen Kegeln ergibt.

2. Zahnimplantat gemäß dem vorhergehenden Anspruch 1, **dadurch gekennzeichnet, dass** der innere Hohlraum (17) des Abutments (12) eine Anordnung von aufeinanderfolgenden Abschnitten mit einer differenzierten Form, in Form einer Matrize und Komplementär zu dem ersten oben erwähnten Abschnitt (14) der enossalen Schraube (11) bereitstellt.

3. Zahnimplantat gemäß den vorhergehenden Ansprüchen, **dadurch gekennzeichnet, dass** der innere Hohlraum (17) des Abutments (12) eine Anordnung von aufeinanderfolgenden Abschnitten mit einer differenzierten Form, in Form einer Matrize und Komplementär zu den oben erwähnten Abschnitten (14, 15, 16) der enossalen Schraube (11) bereitstellt.

## Revendications

1. Implant dentaire adapté pour recevoir des dispositifs prothétiques, ledit implant dentaire comprenant au moins une vis endo-osseuse (11) et une butée (12), ledit dispositif prothétique comprenant au moins une prothèse dentaire (13) apte à être positionnée solidaire de ladite butée (12),
ladite vis endo-osseuse (11) au niveau d'une extrémité supérieure libre possédant des sections externes de forme différenciée (14, 15, 16), sous la forme d'un mâle en vue du couplage à l'intérieur d'une cavité (17) de ladite butée (12),
ladite
vis endo-osseuse (11) possédant dans ladite extrémité supérieure libre au moins trois sections externes présentant une forme différenciée (14, 15, 16) agencées successivement comme suit, une première section au niveau de l'extrémité coronale de la vis endo-osseuse (11) qui fournit une mise en forme externe selon une figure ou section anti-rotation (14),
une deuxième section (15) qui directement
suit ladite première section (14) et définit une première zone en forme de cône (15) avec une inclinaison externe qui est inférieure à un angle α de 8°, de préférence inférieure à 5°, mieux encore inférieure à 4°, une troisième section (16) qui suit directement ladite deuxième section (15) et définit une seconde zone en forme de cône (16) avec un angle d'inclinaison externe β de 50-60°, ou 45°, lesdites deuxième et troisième sections (15, 16) fournissant une mise en forme externe selon une figure ou une section (15, 16) dérivant d'un chevauchement de deux cônes ou cônes tronqués.

2. Implant dentaire selon la revendication précédente 1, **caractérisé**
**en ce que** ladite cavité interne (17) de la butée (12) fournit un agencement de sections présentant successivement une forme différenciée, sous la forme d'une femelle et complémentaire de la première section (14) précitée de la vis endo-osseuse (11).

3. Implant dentaire selon les revendications précédentes,
**caractérisé en ce que** ladite cavité interne (17) de la butée (12) fournit un agencement de sections présentant successivement une forme différenciée, sous la forme d'une femelle et complémentaire des sections (14, 15, 16) précitées de la vis endo-osseuse (11).
